# EUROPÄISCHE PATENTSCHRIFT

(11) **EP 1 559 504 B1**
(45) Veröffentlichungstag und Bekanntmachung des Hinweises auf die Patenterteilung: **24.01.2007**
(21) Anmeldenummer: 05001909.0
(22) Anmeldetag: 31.01.2005
(51) Int. Cl.: B23Q 7/04

(54) **Werkzeugmaschine**
Machine tool
Machine-outil

(30) Priorität: 31.01.2004 DE 202004001452 U
(43) Veröffentlichungstag der Anmeldung: 03.08.2005
(73) Patentinhaber: Bonneick, Heinz, 38226 Salzgitter (DE); Andreu, Kostakis, 12357 Berlin (DE)
(72) Erfinder: Bonneick, Heinz, 38226 Salzgitter (DE); Andreu, Kostakis, 12357 Berlin (DE)
(74) Vertreter: Bremer, Ulrich

(56) Entgegenhaltungen:
- EP-A- 0 076 231
- DE-A1- 19 800 034
- DE-A1- 19 916 977
- DE-U1- 20 110 420
- US-A- 4 716 647

## Beschreibung

Die Erfindung betrifft eine Werkzeugmaschine zum Bearbeiten von Werkstücken in einem Bearbeitungsraum gemäß dem Oberbegriff von Anspruch 1.

Eine derartige Werkzeugmaschine nach der Gantry-Bauart ist z. B. aus der DE 199 16 977 A1 sowie der DE 201 10 420 U1 bekannt. Ein Transportschlitten mit Querschienen ist auf Längsschienen verfahrbar, wobei auf den Querschienen ein Bearbeitungsschlitten mit der in vertikaler Richtung verstellbaren Spindel angebracht ist, so dass drei Achsen gebildet werden, wobei auf einem Bearbeitungstisch eine oder zwei weitere Achsen ausgebildet sein können. Bei derartigen Pick-up-Systemen können Werkzeuge und/oder Werkstücke von der Spindel oder einem von der Spindel aufgenommenen Greifer von außerhalb des Bearbeitungsraums aufgenommen und in den Bearbeitungsraum verfahren werden.

Hierdurch wird eine hohe Vielseitigkeit der Werkzeugmaschine ermöglicht; allerdings ist ein erhöhter Zeitbedarf für die Aufnahme von Werkstücken und/oder Werkzeugen erforderlich.

Gemäß der DE 201 10 420 U1 sind Linearmotoren bzw. Direktantriebe zum Verstellen des Transportschlittens sowie des auf dem Transportschlitten geführten Bearbeitungsschlitten mit Spindel bekannt. Hierdurch entfallen aufwendigere Verstellungen über Kugelrollspindeln usw.

Ein Austausch der Werkzeuge erfolgt direkt durch die Spindel, die zu der externen Werkzeugablage verfahren wird. Ein Austausch der Werkstücke kann erfolgen, indem die Spindel einen Greifer aufnimmt und durch den Greifer ein Werkstück von der externen Werkstückzuführung aufnimmt. Durch die erheblichen Verfahrwege verbleibt jedoch auch bei dem Einsatz von Linearmotoren ein gewisser Zeitaufwand.

Die Spindel dient insbesondere zur Aufnahme von Werkzeugen; es können jedoch auch - wie bei der eingangs genannten DE 199 16 977 A1 - Werkstücke von der Spindel direkt oder mittels eines von der Spindel aufgenommenen Greifers von au-ßerhalb des Bearbeitungsraums aufgenommen und in den Bearbeitungsraum verfahren werden; weiterhin kann die Spindel zum Fügen bzw. Montieren von Werkstücken dienen.

Um die Auswirkungen von Temperaturänderungen auf die Einstellwerte möglichst gering zu halten, sind die Bauteile in der Regel aus Stahl hergestellt. Dennoch ist eine numerische Kompensation der Einstellwerte der verschiedenen Achsen aufgrund der thermischen Ausdehnung der einzelnen Bauteile über eine entsprechende Steuereinrichtung erforderlich.

Der Erfindung liegt die Aufgabe zu Grunde, eine schnelle und sicher einstellbare, mit geringen Kosten und geringem Aufwand herstellbare Werkzeugmaschine zu schaffen.

Diese Aufgabe wird durch eine Werkzeugmaschine nach Anspruch 1 gelöst. Die Unteransprüche beschreiben bevorzugte Weiterbildungen.

Erfindungsgemäß ist somit eine Handhabungseinrichtung auf einer Längsschiene und einer zusätzlichen Längsschienenverlängerung vorgesehen, die sich direkt an die Längsschiene anschließt. Sowohl die Längsschiene bzw. die sie tragende Seitenwandung als auch die Längsschienenverlängerung sind mit Linearmotoren bestückt, so dass die Handhabungseinrichtung sowohl auf die Längsschienenverlängerung als auch auf die Längsschiene verfahrbar ist. Für die Verstellung der Handhabungseinrichtung auf die Längsschiene und somit für einen Zugang in den Bearbeitungsraum ist somit kein zusätzlicher Antrieb erforderlich, es können die ohnehin für die Längsverstellung des Transportschlittens vorgesehenen Linearantriebe verwendet werden.

Durch die Handhabungseinrichtung ist eine direkte Handhabung im Bearbeitungsraum möglich. Es können somit insbesondere auch Werkstücke z. B. durch Umspannen gewendet werden. Weiterhin kann ein Austausch von Werkstücken erfolgen, ohne dass hierzu die Spindel zur Aufnahme eines Greifers verstellt werden muss. Auch der Werkzeugwechsel ist vereinfacht, wobei neben einem vertikalen Werkzeugwechsel auch insbesondere ein horizontaler Werkzeugwechsel möglich ist. Die Handhabungseinrichtung kann mit Werkzeugen und/oder Werkstücken direkt von außen nachgefüllt werden, wozu vorteilhafterweise zwei Handhabungstrommeln vorgesehen sind, von denen eine Trommel Werkstücke aus der Werkstück-Aufnahmevorrichtung entnimmt und die andere Trommel die Werkstück-Aufnahmevorrichtung mit neuen Werkstücken beschickt.

Erfindungsgemäß wird somit die Bearbeitungsgeschwindigkeit der Maschine deutlich erhöht.

Vorteilhafterweise ist mindestens eine zweite Spindel vorgesehen, die auf den gleichen Querschienen wie die erste Spindel verfahrbar ist. Hierbei kann auch der Abstand der Spindeln in Querrichtung zueinander verstellt werden. Grundsätzlich können auch mehr als zwei Spindeln vorgesehen sein.

Durch die beiden Spindeln kann eine deutlich höhere Bearbeitungsgeschwindigkeit erreicht werden als bei der herkömmlichen Verwendung lediglich einer Spindel. Da für die Querverstellung der beiden Spindeln die gleichen Spuleneinrichtungen des Direktantriebs verwendet werden, ist der zusätzliche apparative Aufwand relativ gering.

Die Spindeln können zum einen in zwei oder mehr getrennten Bearbeitungsschlitten aufgenommen sein, die separat auf den Querschienen über den dort angeordneten gemeinsamen Linearantrieb verstellt werden. Weiterhin können die beiden Spindeln auch auf einem gemeinsamen Bearbeitungsschlitten aufgenommen und relativ zueinander durch eine Feinjustiereinrichtung verstellt werden.

Es können z.B. zwei Bearbeitungsschlitten mit jeweils zwei Spindeln oder ein Bearbeitungsschlitten mit drei Spindeln vorgesehen sein. Grundsätzlich können bei allen Ausführungsformen in einem Spindelgehäuse mehr als eine Spindel vorgesehen sein, wobei die Spindeln in dem gemeinsamen Spindelgehäuse einen festen Abstand zueinander haben.

Die Erfindung wird im Folgenden anhand der beiliegenden Zeichnungen an einigen Ausführungsformen näher erläutert. Es zeigen:

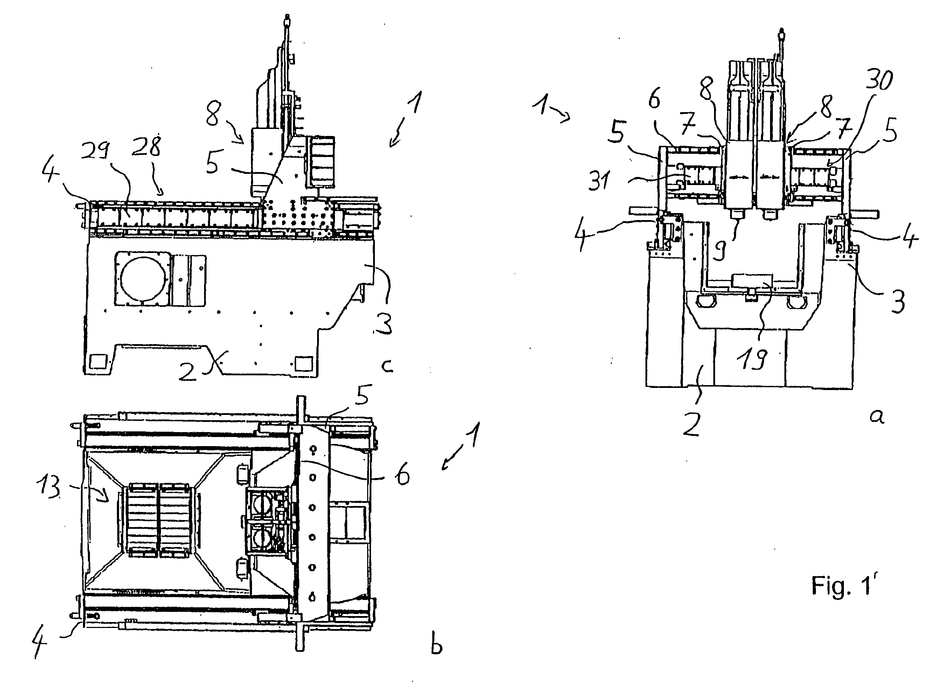

- Fig. 1a, b,c: eine Vorderansicht, Draufsicht und Seitenansicht einer Werkzeugmaschine, die nicht unter den Schutz bereich der Ansprüche fällt;

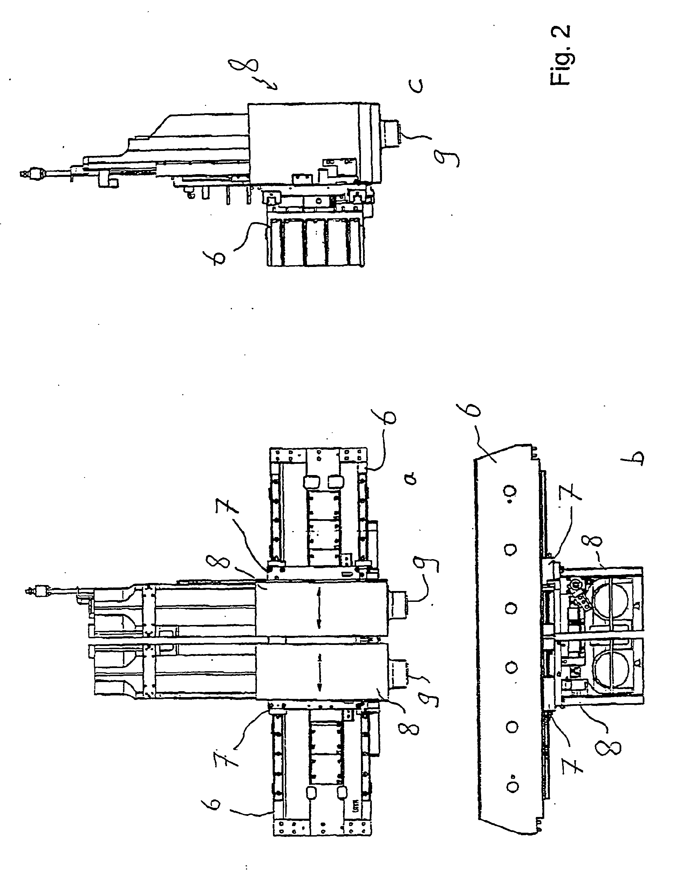

- Fig. 2a,b,c: Detailvergrößerungen des Transportschlittens mit Spindeln aus Fig. 1a, b, c;
- Fig. 3: eine der Fig. 1c entsprechende Seitenansicht ohne Verkleidung der Werkzeugmaschine mit Werkstück- und Werkzeugaufnahme;
- Fig. 4: eine Draufsicht auf eine erfindungsgemäße Werkzeugmaschine;
- Fig. 5a,b: Seitenansichten der Werkzeugmaschine aus Fig. 4 von links (Richtung I) und rechts (Richtung II);
- Fig. 6a,b,c: eine Draufsicht, Vorderansicht und Seitenansicht eines Transportschlittens einer Werkzeugmaschine gemäß einer weiteren Ausführungsform.

Eine Werkzeugmaschine 1 weist ein Maschinenbett 2, Seitenwandungen 3 und auf den Seitenwandungen 3 vorgesehene, in Längsrichtung verlaufende Längsschienen 4 auf. Bei der gezeigten Werkzeugmaschine 1 der Gantry-Bauart begrenzen die Seitenwandungen 3 den Bearbeitungsraum 13. Auf den Längsschienen 4 ist ein Transportschlitten 5 geführt, der Querschienen 6 aufweist, auf denen wiederum seitlich nebeneinander zwei Bearbeitungsschlitten 7 in Querrichtung verstellbar geführt ist.

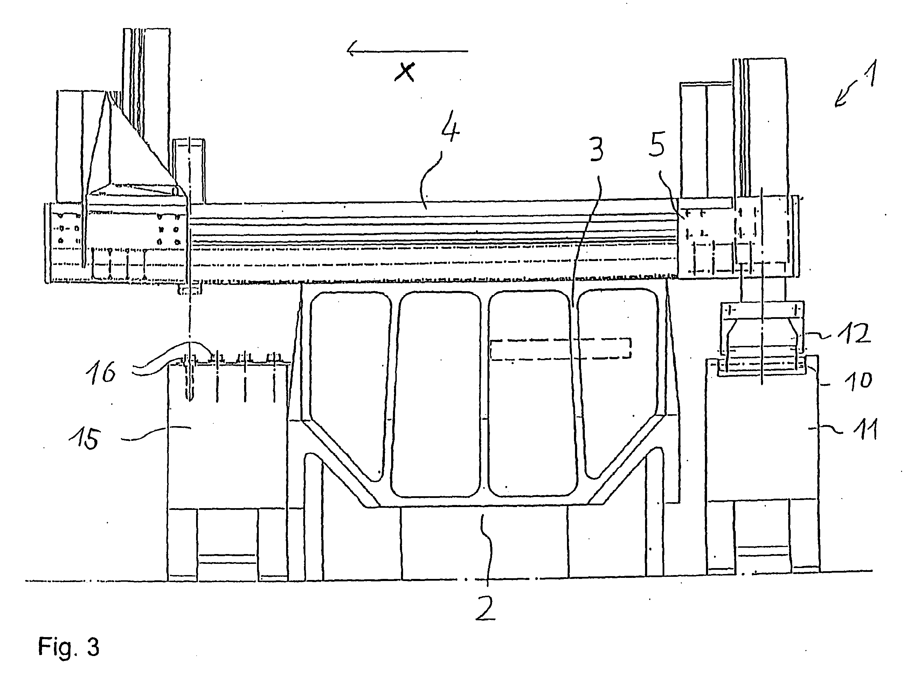

Auf den beiden Bearbeitungsschlitten 7 ist jeweils eine im Folgenden detaillierter beschriebene Spindel 8 mit Spindelstock 9 aufgenommen. Die Spindel 8 kann bei einer derartigen Pick-up-Werkzeugmaschine sowohl in den Bearbeitungsraum 13 als auch - wie in Figur 3 gezeigt - außerhalb des Bearbeitungsraumes 13, z. B. zur Aufnahme von Werkstücken 10 mittels eines Greifers 12 von einer Werkstückzuführung 11, z. B. einem Transportband oder einem Wagen, und weiterhin zu einer Werkzeugablage 15 zur Aufnahme von Werkzeugen 16 geführt werden.

Für die Längsführung des Transportschlittens 5 sind am oberen Ende der Seitenwandungen 3 bzw. an den Längsschienen 4 Linearantriebe 28 mit nebeneinander gesetzten Spuleneinrichtungen 29 vorgesehen, die an den beiden Seiten gleichmäßig angesteuert werden. Auch die Verstellung des Bearbeitungsschlittens 7 erfolgt über an oder zwischen den Querschienen 6 vorgesehene Linearantriebe 30 mit nebeneinander gesetzten Spuleneinrichtungen 31. Die Bearbeitungsschlitten 7, vorteilhafterweise auch der Transportschlitten 5 mit den Querschienen 6 sind hierbei ganz oder weitgehend aus Aluminium gefertigt.

Die Spindeln 8 können Werkstücke 10 von außerhalb in den Bearbeitungsraum 13 einführen und in eine Werkstück- Aufnahmevorrichtung, z.B. einen Bearbeitungstisch 19 legen. Der Bearbeitungstisch 19 kann z.B. auf einer Werkstückhalteeinrichtung 19a aufgenommen sein, die in den Seitenwandungen 3 schwenkbar gelagert ist, wodurch eine Drehachse zur Positionierung der Werkstücke gebildet wird. Weiterhin kann auch der Bearbeitungstisch 19 um seine Hochachse drehbar sein, so dass eine fünfachsige Bearbeitung - drei translatorische Achsen der Werkzeugverstellung und zwei rotatorische Achsen der Werkstückdrehung - möglich ist.

Nach Ablage des Werkstücks auf dem Bearbeitungstisch kann eine der Spindeln 8 nacheinander Werkzeuge 16 zur Bearbeitung der Werkstücke 10 aufnehmen. Weiterhin kann in der Spindel eine Werkzeugaufnahme aufgenommen sein sowohl für die Aufnahme von Werkzeugen als auch für die Aufnahme eines Greifers für z.B. Werkstücke oder Messgeräte.

Die Bearbeitungsschlitten 7 sind unabhängig voneinander verstellbar, wobei sie sich gegenseitig jeweils zu einer Seite hin begrenzen.

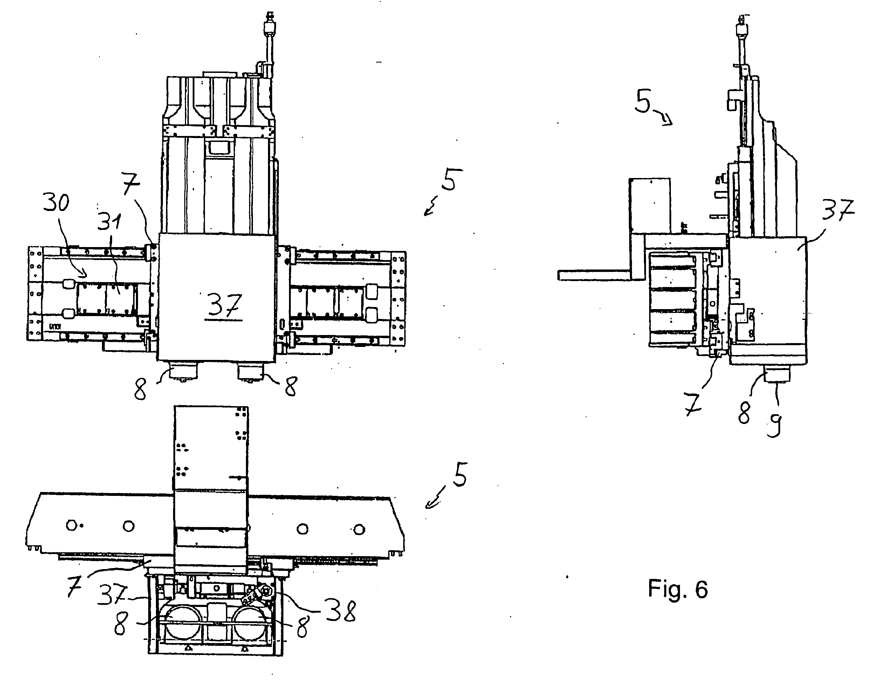

Bei der Ausführungsform der Fig. 6 sind die beiden Spindeln 8 nicht in zwei relativ zueinander verstellbaren Bearbeitungsschlitten 7, sondern in einem gemeinsamen Bearbeitungsschlitten 37 angeordnet und können über eine eventuell vorgesehene Feinjustiereinrichtung 38 in Querrichtung relativ zueinander verstellbar. Abweichend hiervon ist grundsätzlich auch die Aufnahme von zwei oder mehr Spindeln in einem gemeinsamen Spindelgehäuse möglich.

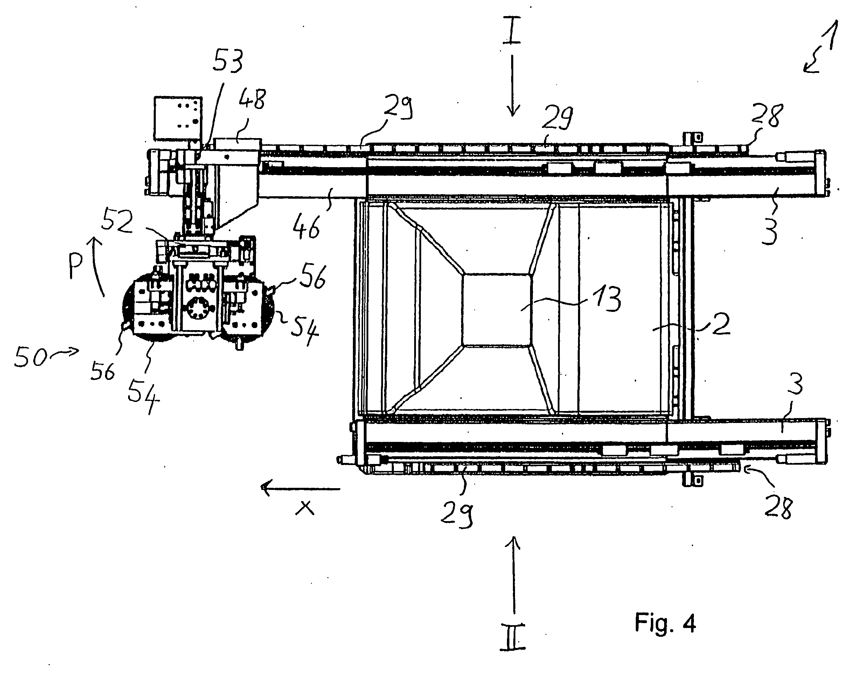

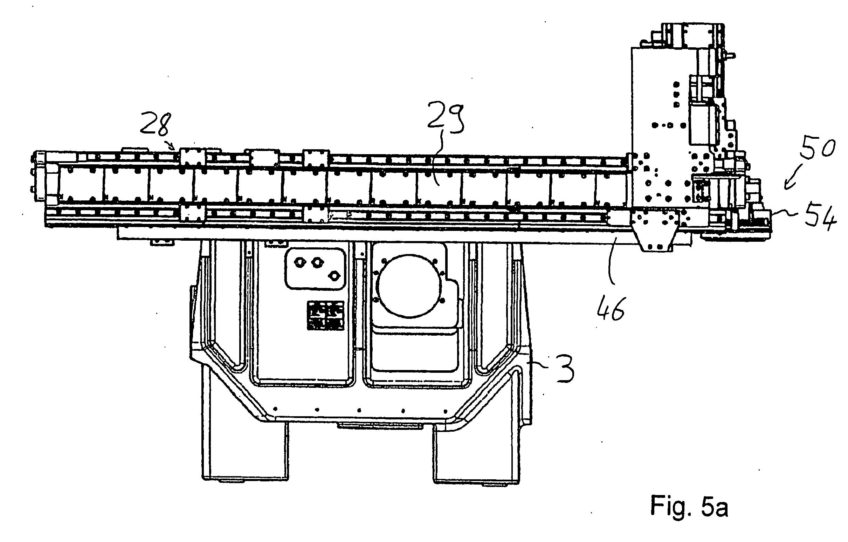

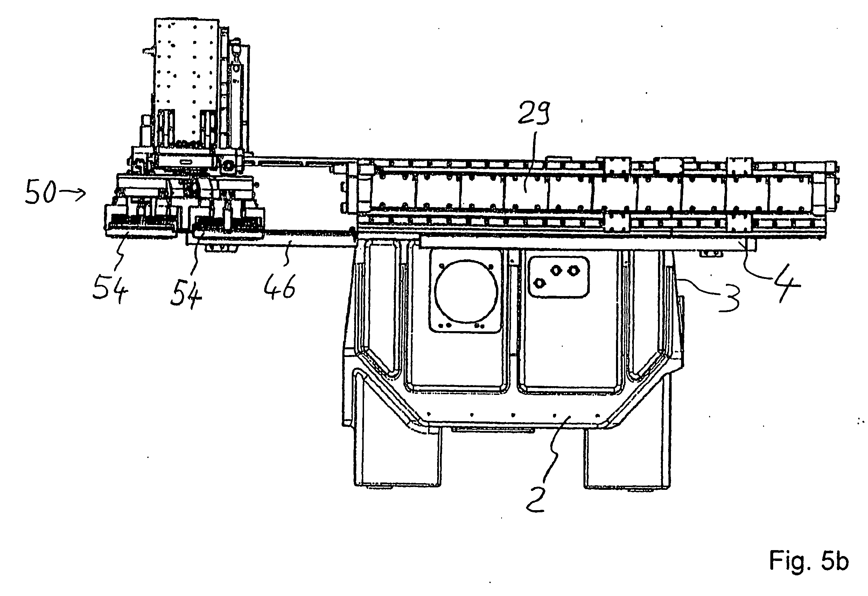

Gemäß Fig. 4 und 5 a,b ist die linke Längsschiene 4 nach vorne über die Seitenwandung 3 hinaus gegenüber der rechten Längsschiene 4 um eine Längsschienenverlängerung 46 verlängert. Hierbei sind die Spuleneinrichtungen 29 durchgängig auf der linken Längsschiene 4 und auf der Längsschienenverlängerung 46 vorgesehen, grundsätzlich ist entsprechend auch eine Anbringung auf der rechten Seite möglich.

Auf der Längsschienenverlängerung 46 ist ein Handhabungsschlitten 48 mit einer Handhabungseinrichtung 50 aufgenommen, die in Längsrichtung auch entlang der linken Längsschiene 4 verfahrbar ist. Die Handhabungseinrichtung 50 ist über ein Schwenkgelenk 52 an dem Handhabungsschlitten 48 befestigt und kann gemäß Pfeil P in x-Richtung bzw. Längsrichtung nach vorne zu einer Werkzeugzuführung und/oder Werkstückzuführung geschwenkt werden.

Die Handhabungseinrichtung 50 weist z.B. mindestens zwei Handhabungstrommeln 54 mit Taschen 56 auf, in denen wahlweise Werkstücke und/oder Werkzeuge aufgenommen werden können. Anstelle der Taschen 56 können auch Greifer vorgesehen sein, die aktiv Werkstücke und/oder Werkzeuge greifen können. Die Handhabungstrommeln 54 werden für einen Werkstückwechsel zu der Werkstück-Aufnahmevorrichtung 19 im Bearbeitungsraum verfahren, woraufhin eine Handhabungstrommel 54 das jeweils aufgenommene Werkstück entnimmt und die andere Handhabungstrommeln 54 ein neues Werkstück der Werkstück-Aufnahmevorrichtung 19 zuführt.

Weiterhin ist ein zusätzliches Schwenkgelenk 53 der Handhabungseinrichtung 50 im Bereich der Längsschienenverlängerung 46 vorgesehen, um das die Handhabungseinrichtung 50 verschwenkt werden kann zur Freigabe des Bearbeitungsraums für Reparaturen und Wartungen sowie zum Zuführen größerer Anordnungen. Hierdurch kann vorteilhafterweise die gesamte Vorderseite des Bearbeitungsraums freigegeben werden.

Die Handhabungseinrichtung 50 kann erfindungsgemäß wahlweise eingesetzt werden zum:
Be- und Entladen von Werkstücken oder Paletten oder Vorrichtungen mit Werkstücken,
Werkzeugwechseln,
Montieren des im Bearbeitungsraum 13 bearbeiteten Werkstückes, z.B. zum Einschrauben eines Lagerdeckels,
Fügen,
Wenden, z.B. zur Änderung der Positionierung des Werkstücks im Bearbeitungsraum 13, insbesondere zum Umspannen des Werkstücks,
Messen, z.B. durch Aufnahme einer entsprechenden Messeinrichtung, z.B. einer Lehre zur Messung von Abständen des Werkstückes zwischen verschiedenen Bearbeitungsschritten.

## Patentansprüche

1. Werkzeugmaschine, mit mindestens
sich in Längsrichtung erstreckenden Seitenwandungen (3), einem zwischen den Seitenwandungen ausgebildeten Bearbeitungsraum (13), in dem eine Werkstück- Aufnahmevorrichtung (19) vorgesehen ist,
auf den Seitenwandungen (3) angeordneten Längsschienen (4), einem auf den Längsschienen (4) verfahrbaren Transportschlitten (5),
einem auf Querschienen (6) des Transportschlittens (5) in Querrichtung verfahrbaren Bearbeitungsschlitten (7, 27), einer am Bearbeitungsschlitten (7, 37) aufgenommenen Spindel (8) zur Aufnahme mindestens eines Werkzeuges,
in den Seitenwandungen (3) und/oder den Längsschienen (4) angeordneten Linearmotoren (28) mit Spuleneinrichtungen (29) für die Längsverstellung des Transportschlittens (5),
in dem Transportschlitten (5) in Querrichtung verteilt angeordneten Linearmotoren (30) mit Spuleneinrichtungen (31) für die Querverstellung des Bearbeitungsschlittens (7, 37)
**dadurch gekennzeichnet, dass**
eine der beiden Längsschienen (4) um eine über den Bearbeitungsraum (13) hinaus gehende Längsschienenverlängerung (46) verlängert ist,
auf der Längsschienenverlängerung (46) Spuleneinrichtungen (29) vorgesehen sind,
ein Handhabungsschlitten (48) mit einer Handhabungseinrichtung (50) auf der Längsschienenverlängerung (46) aufgenommen und durch die Spuleneinrichtungen (29) in Längsrichtung auf der Längsschiene (4) und der Längsschienenverlängerung (46) verfahrbar ist, und
durch die Handhabungseinrichtung (50) Werkstücke in der Werkstück- Aufnahmevorrichtung (19) austauschbar sind.

2. Werkzeugmaschine nach Anspruch 1, **dadurch gekennzeichnet, dass** von der Handhabungseinrichtung (50) wahlweise Werkstücke, Paletten mit Werkstücken oder Aufnahmevorrichtungen mit Werkstücken in den Bearbeitungsraum einführbar sind.

3. Werkzeugmaschine nach einem der vorherigen Ansprüche, **dadurch gekennzeichnet, dass** durch die Handhabungseinrichtung (50) im Bearbeitungsraum (13) Werkstücke montierbar, z.B. einschraubbar, sind.

4. Werkzeugmaschine nach einem der vorherigen Ansprüche, **dadurch gekennzeichnet, dass** durch die Handhabungseinrichtung (50) das in der Spindel aufgenommenen Werkzeug wechselbar ist.

5. Werkzeugmaschine nach Anspruch 4, **dadurch gekennzeichnet, dass** die Handhabungseinrichtung (50) horizontal schwenkbare Taschen (56) zur horizontalen Beschickung der Spindel (8) aufweist.

6. Werkzeugmaschine nach Anspruch 5, **dadurch gekennzeichnet, dass** von der Spindel Werkzeuge auch vertikal aus den Taschen (56) entnehmbar sind.

7. Werkzeugmaschine nach einem der vorherigen Ansprüche, **dadurch gekennzeichnet, dass** durch die Handhabungseinrichtung (50) im Bearbeitungsraum (13) Werkstücke durch Fügen bearbeitbar sind.

8. Werkzeugmaschine nach einem der vorherigen Ansprüche, **dadurch gekennzeichnet, dass** durch die Handhabungseinrichtung (50) im Bearbeitungsraum (13) Werkstücke wendbar sind, z.B. durch Umspannen.

9. Werkzeugmaschine nach einem der vorherigen Ansprüche, **dadurch gekennzeichnet, dass** durch die Handhabungseinrichtung (50) im Bearbeitungsraum (13) Werkstücke vermessbar sind.

10. Werkzeugmaschine nach einem der vorherigen Ansprüche, **dadurch gekennzeichnet, dass** die Handhabungseinrichtung (50) mindestens eine Handhabungstrommel (54) zum Aufnehmen und Austauschen von Werkzeugen und/oder Werkstücken aufweist.

11. Werkzeugmaschine nach Anspruch 10, **dadurch gekennzeichnet, dass** die Handhabungseinrichtung (50) mindestens zwei Handhabungstrommeln (54) aufweist, von denen eine Werkstücke aus der Werkstück-Aufnahmevorrichtung (19) entnimmt und die andere Werkstücke der Werkstück-Aufnahmevorrichtung (19) zuführt.

12. Werkzeugmaschine nach einem der vorherigen Ansprüche, **dadurch gekennzeichnet, dass** die Handhabungseinrichtung (50) Greifer zum aktiven Greifen von Werkzeugen und/oder Werkstücken aufweist.

13. Werkzeugmaschine nach einem der vorherigen Ansprüche, **dadurch gekennzeichnet, dass** die Handhabungseinrichtung (50) am Handhabungsschlitten (48) um ein Schwenkgelenk (52) horizontal zu einer Werkstücknachfüllung und/oder Werkzeugnachfüllung schwenkbar ist.

14. Werkzeugmaschine nach einem der vorherigen Ansprüche, **dadurch gekennzeichnet, dass** die Handhabungseinrichtung (50) am Handhabungsschlitten (48) um ein Schwenkgelenk (53) im Bereich der Längsschienenverlängerung 46 horizontal zur Freigabe der Vorderseite des Bearbeitungsraums (13) schwenkbar ist.

15. Werkzeugmaschine nach einem der vorherigen Ansprüche, **dadurch gekennzeichnet, dass**
auf den Querschienen (6) eine zweite Spindel (8) verfahrbar aufgenommen ist,
die beiden Spindeln (8) über dieselben Spuleneinrichtungen verfahrbar sind, und
die beiden Spindeln (8) in Querrichtung relativ zueinander verfahrbar sind.

16. Werkzeugmaschine nach Anspruch 15, **dadurch gekennzeichnet, dass** die beiden Spindeln (8) in zwei auf den Querschienen (6) aufgenommenen Bearbeitungsschlitten (7) aufgenommen sind, die relativ zueinander verstellbar sind.

17. Werkzeugmaschine nach Anspruch 15 oder 16, **dadurch gekennzeichnet, dass** an oder parallel zu den Querschienen (6) Linearantriebe (30) für die Querverstellung des einen Bearbeitungsschlittens (37) oder der beiden Bearbeitungsschlitten (7) vorgesehen sind.

18. Werkzeugmaschine nach einem der vorherigen Ansprüche, **dadurch gekennzeichnet, dass** die Handhabungsvorrichtung (50) am Handhabungsschlitten (48) in mindestens einem Gelenk (52, 53) um eine Hochachse horizontal schwenkbar ist.

19. Werkzeugmaschine nach Anspruch 18, **dadurch gekennzeichnet, dass** die Handhabungsvorrichtung (50) am Handhabungsschlitten (48) in einem Gelenk (52) zum Nachfüllen von Werkzeugen und/oder Werkstücken schwenkbar ist.

20. Werkzeugmaschine nach Anspruch 18 oder 19, **dadurch gekennzeichnet, dass** die Handhabungsvorrichtung (50) am Handhabungsschlitten (48) in einem im Bereich der Längsschienenverlängerung (46) angeordneten Gelenk (53) zur Freigabe des Bearbeitungsraums schwenkbar ist.

## Claims

1. Machine tool having at least:
side walls (3) which extend in the longitudinal direction;
a machining space (13) which is constructed between said side walls and in which a workpiece-holding device (19) is provided;
longitudinal rails (4) which are disposed on said side walls (3) ;
a transporting carriage (5) which is capable of being conveyed on said longitudinal rails (4);
a machining carriage (7, 37) which is capable of being conveyed in the transverse direction on transverse rails (6) belonging to said transporting carriage (5); a spindle (8), which is held on said machining carriage (7, 37), for holding at least one tool; linear motors (28), which are disposed in the side walls (3) and/or the longitudinal rails (4) and have coil apparatuses (29), for the longitudinal adjustment of the transporting carriage (5); and
linear motors (30), which are disposed in the transporting carriage (5) so as to be distributed in the transverse direction and have coil apparatuses (31), for the transverse adjustment of the machining carriage (7, 37);
**characterised in that**
one of the two longitudinal rails (4) is prolonged by a longitudinal rail prolongation (46) which passes beyond the machining space (13);
coil apparatuses (29) are provided on said longitudinal rail prolongation (46);
a handling carriage (48) with a handling apparatus (50) is held on said longitudinal rail
prolongation (46) and is capable of being conveyed by said coil apparatuses (29) in the longitudinal direction on the longitudinal rail (4) and the longitudinal rail prolongation (46) ; and
workpieces can be exchanged in the workpiece-holding device (19) by the handling apparatus (50).

2. Machine tool according to claim 1,
**characterised in that** workpieces, pallets with workpieces or holding devices with workpieces can be selectively introduced into the machining space by the handling apparatus (50).

3. Machine tool according to one of the preceding claims,
**characterised in that** workpieces can be mounted, for example screwed in, in the machining space (13) by means of the handling apparatus (50).

4. Machine tool according to one of the preceding claims,
**characterised in that** the tool held in the spindle can be changed by means of the handling apparatus (50).

5. Machine tool according to claim 4,
**characterised in that** the handling apparatus (50) has horizontally pivotable pockets (56) for loading the spindle (8) horizontally.

6. Machine tool according to claim 5,
**characterised in that** tools can also be removed vertically from the pockets (56) by the spindle.

7. Machine tool according to one of the preceding claims,
**characterised in that** workpieces can be machined by assembly in the machining space (13) by means of the handling apparatus (50)

8. Machine tool according to one of the preceding claims,
**characterised in that** workpieces can be turned in the machining space (13), for example by re-chucking, by means of the handling apparatus (50).

9. Machine tool according to one of the preceding claims,
**characterised in that** workpieces can be measured in the machining space (13) by means of the handling apparatus (50).

10. Machine tool according to one of the preceding claims;
**characterised in that** the handling apparatus (50) has at least one handling drum (54) for holding and exchanging tools and/or workpieces.

11. Machine tool according to claim 10,
**characterised in that** the handling apparatus (50) has at least two handling drums (54), of which one removes workpieces from the workpiece-holding device (19) and the other feeds workpieces to said workpiece-holding device (19).

12. Machine tool according to one of the preceding claims,
**characterised in that** the handling apparatus (50) has grippers for actively gripping tools and/or workpieces.

13. Machine tool according to one of the preceding claims,
**characterised in that** the handling apparatus (50) can be pivoted horizontally, on the handling carriage (48), about a pivot joint (52), for the purpose of replenishing it with workpieces and/or tools.

14. Machine tool according to one of the preceding claims,
**characterised in that** the handling apparatus (50) can be pivoted horizontally, on the handling carriage (48), about a pivot joint (53) in the region of the longitudinal rail prolongation (46), for the purpose of clearing the front side of the machining space (13).

15. Machine tool according to one of the preceding claims,
**characterised in that**
a second spindle (8) is held on the transverse rails (6) so as to be capable of being conveyed;
the two spindles (8) are capable of being conveyed via the same coil apparatuses; and
the two spindles (8) are capable of being conveyed in the transverse direction relative to one another.

16. Machine tool according to claim 15,
**characterised in that** the two spindles (8) are held in two machining carriages (7) which are held on the transverse rails (6) and are capable of being adjusted relative to one another.

17. Machine tool according to claim 15 or 16,
**characterised in that** linear drives (30) for the transverse adjustment of one machining carriage (37) or both machining carriages (7) are provided on or parallel to the transverse rails (6).

18. Machine tool according to one of the preceding claims,
**characterised in that** the handling device (50) can be pivoted horizontally, on the handling carriage (48), in at least one joint (52, 53) about a vertical axis.

19. Machine tool according to claim 18,
**characterised in that** the handling device (50) can be pivoted, on the handling carriage (48), in a
joint (52), for the purpose of replenishing it with tools and/or workpieces.

20. Machine tool according to claim 18 or 19,
**characterised in that** the handling device (50) can be pivoted, on the handling carriage (48), in a
joint (53) disposed in the region of the longitudinal rail prolongation (46), for the purpose of clearing the machining space.

## Revendications

1. Machine-outil comprenant au moins des parois latérales (3), qui s'étendent dans le sens longitudinal, un espace d'usinage (13), qui est conçu entre les parois latérales et dans lequel est prévu un dispositif recevant des pièces à usiner (19), des rails longitudinaux (4), qui sont disposés sur les parois latérales (3), un chariot de transport (5), qui peut se déplacer sur les rails longitudinaux (4), un chariot d'usinage (7, 27), qui peut se déplacer sur les rails transversaux (6) du chariot de transport (5) dans le sens transversal, une broche (8), qui est reçue dans le chariot d'usinage (7, 37) et qui sert à recevoir au moins un outil, des moteurs linéaires (28) avec des équipements de bobine (29) pour le réglage longitudinal du chariot de transport (5), qui sont disposés dans les parois latérales (3) et/ou dans les rails longitudinaux (4), des moteurs linéaires (30) avec équipements de bobine (31) pour le réglage transversal du chariot d'usinage (7, 37), qui sont disposés, de manière répartie, dans le chariot de transport (5) dans le sens transversal, **caractérisé en ce qu'**un des deux rails longitudinaux (4) présente un prolongement de rail longitudinal (46), qui s'étend au-delà de l'espace d'usinage (13), **en ce que** des équipements de bobine (29) sont prévus sur le prolongement de rail longitudinal (46), **en ce qu'**un chariot de maniement (48) avec un dispositif de maniement (50) est reçu sur le prolongement de rail longitudinal (46) et **en ce qu'**il peut être déplacé sur le rail longitudinal (4) et sur le prolongement de rail longitudinal (46) dans le sens longitudinal, grâce aux équipements de bobine (29) et **en ce que** des pièces à usiner peuvent être échangées dans le dispositif recevant des pièces à usiner (19), grâce au dispositif de maniement (50).

2. Machine-outil suivant la revendication 1, **caractérisée en ce que** des pièces à usiner, des palettes avec des pièces à usiner ou des dispositifs recevant des pièces à usiner peuvent être introduits au choix dans l'espace d'usinage par le dispositif de maniement (50).

3. Machine-outil suivant une des revendications précédentes, **caractérisée en ce que** des pièces à usiner peuvent être montées, par exemple vissées, dans l'espace d'usinage (13), grâce au dispositif de maniement

4. Machine-outil suivant une des revendications précédentes, **caractérisée en ce que** l'outil reçu dans la broche est échangeable grâce au dispositif de maniement.

5. Machine-outil suivant la revendication 4, **caractérisée en ce que** le dispositif de maniement (50) présente des poches (56) orientables horizontalement pour une alimentation horizontale de la broche (8).

6. Machine-outil suivant la revendication 5, **caractérisée en ce que** la broche peut aussi prélever des outils verticalement dans les poches

7. Machine-outil suivant une des revendications précédentes, **caractérisée en ce que** le dispositif de maniement (50) permet d'usiner par assemblage des pièces à usiner dans l'espace d'usinage (13).

8. Machine-outil suivant une des revendications précédentes, **caractérisée en ce que** le dispositif de maniement (50) permet de retourner des pièces à usiner, par exemple par remontage des pièces, dans l'espace d'usinage (13).

9. Machine-outil suivant une des revendications précédentes, **caractérisée en ce que** le dispositif de maniement permet de mesurer des pièces à usiner dans l'espace d'usinage (13).

10. Machine-outil suivant une des revendications précédentes, **caractérisée en ce que** le dispositif de maniement (50) présente au moins un tambour de maniement (54) destiné à recevoir et à échanger des outils et/ou des pièces à usiner.

11. Machine-outil suivant la revendication 10, **caractérisée en ce que** le dispositif de maniement (50) présente au moins deux tambours de maniement (54), dont l'un prélève des pièces à usiner dans le dispositif recevant des pièces à usiner (19) et dont l'autre amène des pièces à usiner au dispositif recevant des pièces à usiner (19).

12. Machine-outil suivant une des revendications précédentes, **caractérisée en ce que** le dispositif de maniement (50) présente des éléments préhenseurs servant à saisir activement des outils et/ou des pièces à usiner.

13. Machine-outil suivant une des revendications précédentes, **caractérisée en ce que** le dispositif de maniement (50) est orientable horizontalement par rapport à une recharge de pièces à usiner et/ou à une recharge d'outils autour d'une articulation d'orientation (52) au niveau du chariot de maniement (48).

14. Machine-outil suivant une des revendications précédentes, **caractérisée en ce que** le dispositif de maniement (50) est orientable horizontalement par rapport à la libération de la face avant de l'espace d'usinage (13) autour d'une articulation d'orientation (53) au niveau du chariot de maniement (48) dans la zone du prolongement de rail longitudinal 46.

15. Machine-outil suivant une des revendications précédentes, **caractérisée en ce qu'**une seconde broche est reçue de manière déplaçable sur les rails transversaux (6), **en ce que** les deux broches (8) sont déplaçables par l'intermédiaire des mêmes équipements de bobine, et **en ce que** les deux broches (8) sont déplaçables l'une par rapport à l'autre dans le sens transversal.

16. Machine-outil suivant la revendication 15, **caractérisée en ce que** les deux broches (8) sont reçues dans deux chariots d'usinage (7), reçus eux-mêmes sur les rails transversaux, qui sont réglables l'un par rapport à l'autre.

17. Machine-outil suivant la revendication 15 ou 16, **caractérisée en ce que** pour le réglage transversal de l'un des chariots d'usinage (37) ou des deux chariots d'usinage (7), des moteurs linéaires (30) sont prévus sur les rails transversaux (6) ou parallèlement à ceux-ci.

18. Machine-outil suivant une des revendications précédentes, **caractérisée en ce que** le dispositif de maniement (50) est orientable horizontalement autour d'un axe vertical dans au moins une articulation (52, 53) prévue sur le chariot de maniement (48).

19. Machine-outil suivant la revendication 18, **caractérisée en ce que** le dispositif de maniement (50) est orientable dans une articulation (52) prévue sur le chariot de maniement (48) pour recharger des outils et/ou des pièces à usiner.

20. Machine-outil suivant la revendication 18 ou 19, **caractérisée en ce que** le dispositif de maniement (50) est orientable dans une articulation (53) disposée sur le chariot de maniement (48), au niveau du prolongement (46) des rails longitudinaux pour libérer l'espace d'usinage.
